# EUROPEAN PATENT APPLICATION

(11) **EP 2 405 318 A1**
(43) Date of publication of application: **11.01.2012**
(21) Application number: 10168542.8
(22) Date of filing: 06.07.2010
(51) Int. Cl.: G05F 1/577, H02M 3/335

(54) **Power-supply circuit**

(71) Applicant: ST-Ericsson SA, 1228 Genève Plan-les-Ouates (CH)
(72) Inventor: Johnasson, Henrik, SE-247 61, VEBERÖD (SE)
(74) Representative: Ström & Gulliksson AB

(57) **Abstract**

A power-supply circuit (10) for an electronic circuit (2) having a plurality of functional units (5-1,...,5-*N*) is disclosed. The power-supply circuit (10) comprises a plurality of supply-voltage regulators (30-1,...,30-*N*), each adapted to provide an output supply voltage to a corresponding one of the functional units (5-1,...,5-*N*) and each having a disabled and an enabled state. Furthermore, the power-supply circuit (10) comprises a preregulator (20) adapted to provide a common intermediate supply voltage to all of the supply-voltage regulators (30-1,...,30-*N*), wherein the preregulator (20) is adapted to generate the intermediate supply voltage such that it follows a reference level of the preregulator. Moreover, the power-supply circuit (10) comprises a control unit (40) adapted to control the reference level of the preregulator (20) at least based on which of the supply-voltage regulators (30-1,...,30-*N*) are currently in the enabled state and which of the supply-voltage regulators (30-1,...,30-*N*) are currently in the disabled state. A related method of operating the power-supply circuit (10), a related computer program product, and a related computer-readable medium are also disclosed.

## Description

### Technical Field

The present invention relates to a power-supply circuit for an electronic circuit.

### Background

Almost all portable handheld electronic devices need to have their own energy storage, e.g. a battery. Associated with all kinds of storage is that there is a limit on how much that can be stored. Hence, there is a limit on the energy available to the device and therefore a limit to its usage time before a recharge is needed. Hence, power efficiency is an important metric of portable devices. It is also an important metric for stationary (or non-portable) devices. Not only usage time is driving power efficiency. Also the heat generated needs to be handled/removed to avoid making the portable or non-portable device too hot. The heat can make usage of the device unpleasant either directly due to high temperature, by audible noise, other inconveniencies like additional weight and/or size from the cooling equipment, decreased lifetime of the device, and/or costly cooling solutions.

A device's power distribution converts the input power supply (e.g. from a battery or a supply generated from mains) into several output power supplies that are needed for the integrated circuits and other circuits comprised in the device.

The conversion of power from the input power supply to the output power supplies is normally performed using a set of voltages. Two commonly used types of voltage regulators are so called low drop-out regulators (LDOs) and buck converters. An LDO have the advantage of being relatively small and capable of generating an output voltage with relatively low noise. However, a drawback with the LDOs is that they normally have a relatively low efficiency. A buck converter, which is a switched-type regulator, is normally capable of providing a relatively high efficiency, but normally produces a more noisy output voltage than an LDO, and also normally has a larger size than an LDO, mostly due to the need for an inductor.

To achieve the best power efficiency, each output power supply should have its own dedicated buck converter. However, this is a costly and PCB-area consuming solution, which may also be too noisy.

On the other hand, to achieve the cheapest and smallest solution, each output power supply should have its own dedicated LDO for generating the output supply voltages. However, this may cause excessive power losses. If the power losses are too large, this solution might actually become relatively large, and expensive, due to cooling requirements. To reduce this problem, there exist solutions using both a buck and several LDOs in combination to get a reasonable combination of power, area, and cost efficiency. First, the input supply voltage is converted to an intermediate lower supply voltage by the buck converter. This intermediate supply voltage is used as a supply voltage for the LDOs. This technique is sometimes referred to as preregulation. An example of such preregulation is illustrated in Fig. 4 of US 2008/0067995 A1 .

The power dissipation of an LDO depends on the difference between its input and output supply voltages. Since the preregulation decreases the input supply voltage of the LDOs (compared with if no preregulation had been used), the preregulation provides for an improved power efficiency compared with the non-preregulated solution (using only a plurality of LDOs), thereby providing a reduced power dissipation. However, an even further reduced power dissipation would be desirable.

### Summary

An object of the present invention is to facilitate relatively low power dissipation in the generation of multiple supply voltages for an electronic circuit.

According to a first aspect, there is provided a power-supply circuit for an electronic circuit having a plurality of functional units. The power-supply circuit comprises a plurality of supply-voltage regulators, each adapted to provide an output supply voltage to a corresponding one of the functional units and each having a disabled and an enabled state. Furthermore, the power-supply circuit comprises a preregulator adapted to provide a common intermediate supply voltage to all of the supply-voltage regulators. The preregulator is adapted to generate the intermediate supply voltage such that it follows a reference level of the preregulator. Moreover, the power-supply circuit comprises a control unit adapted to control the reference level of the preregulator at least based on which of the supply-voltage regulators are currently in the enabled state and which of the supply-voltage regulators are currently in the disabled state.

The control unit may be adapted to determine, for each of the supply-voltage regulators currently in the enabled state, a minimum required intermediate supply voltage for the supply-voltage regulator. Furthermore, the control unit may be adapted to control the reference level of the preregulator such that said minimum required intermediate supply voltage is met for each of the supply-voltage regulators currently in the enabled state. For example, the control unit may be adapted to control the reference level of the preregulator such that it equals the highest minimum required intermediate supply voltage for the supply-voltage regulators currently in the enabled state.

The control unit may be adapted to determine said minimum required intermediate supply voltage for at least one of the supply-voltage regulators based on a performance-parameter requirement of the functional unit connected to that supply-voltage regulator. Said performance-parameter requirement may e.g. be a requirement on a power-supply rejection ratio of the functional unit, on a signal to noise ratio of the functional unit, or on a stability of an oscillator of the functional unit. Said at least one of the supply-voltage regulators may be adapted to generate its output supply voltage such that it follows a reference level of the supply-voltage regulator. The control unit may be further adapted to control the reference level of the supply-voltage regulator based on said performance-parameter requirement.

The control unit may be adapted to, when the reference level of the preregulator is to be changed from a first level to a second level, change the reference level of the preregulator stepwise via a number of intermediate reference levels between the first and the second level.

At least one of the supply-voltage regulators may be adapted to generate its output supply voltage such that it follows a reference level of the supply-voltage regulator. The control unit may be adapted to, when the reference level of the supply-voltage regulator is to be changed from a first level to a second level, change the reference level of the supply-voltage regulator stepwise via a number of intermediate reference levels between the first and the second level.

The preregulator may e.g. be a buck regulator. At least one (possibly two or more, or even all) of the supply-voltage regulators may be a low drop-out (LDO) regulator.

According to a second aspect, there is provided an electronic circuit that comprises a power-supply circuit according to the first aspect and said functional units.

According to a third aspect, there is provided a method of controlling a power-supply circuit for an electronic circuit having a plurality of functional units. The power-supply circuit comprises a plurality of supply-voltage regulators, each adapted to provide an output supply voltage to a corresponding one of the functional units and each having a disabled and an enabled state. Furthermore, the power-supply circuit comprises a preregulator adapted to provide a common intermediate supply voltage to all of the supply-voltage regulators. The preregulator is adapted to generate the intermediate supply voltage such that it follows a reference level of the preregulator. The method of controlling the power-supply circuit comprises controlling the reference level of the preregulator at least based on which of the supply-voltage regulators are currently in the enabled state and which of the supply-voltage regulators are currently in the disabled state.

The method may further comprise determining, for each of the supply-voltage regulators currently in the enabled state, a minimum required intermediate supply voltage for the supply-voltage regulator. Controlling the reference level of the preregulator may further comprise controlling the reference level of the preregulator such that said minimum required intermediate supply voltage is met for each of the supply-voltage regulators currently in the enabled state. For example, controlling the reference level of the preregulator may comprise controlling the reference level of the preregulator such that it equals the highest minimum required intermediate supply voltage for the supply-voltage regulators currently in the enabled state. The method may comprise determining said minimum required intermediate supply voltage for at least one of the supply-voltage regulators based on a performance-parameter requirement of the functional unit connected to that supply-voltage regulator.

Said performance-parameter requirement may be a requirement on a power-supply rejection ratio of the functional unit, on a signal to noise ratio of the functional unit, or on a stability of an oscillator of the functional unit.

According to a fourth aspect, there is provided a computer program product comprising computer program code means for executing the method according to the third aspect when said computer program code means are run by a programmable control unit of the power-supply circuit.

According to a fifth aspect, there is provided a computer readable medium having stored thereon a computer program product comprising computer program code means for executing the method according to the third aspect when said computer program code means are run by a programmable control unit of the power-supply circuit.

Further embodiments of the invention are defined in the dependent claims.

It should be emphasized that the term "comprises/comprising" when used in this specification is taken to specify the presence of stated features, integers, steps, or components, but does not preclude the presence or addition of one or more other features, integers, steps, components, or groups thereof.

### Brief Description of the Drawings

Further objects, features and advantages of embodiments of the invention will appear from the following detailed description, reference being made to the accompanying drawings, in which:
Fig. 1 schematically illustrates an electronic apparatus comprising an electronic circuit according to an embodiment of the present invention;
Fig. 2 is a block diagram of an electronic circuit according to an embodiment of the present invention;
Fig. 3 is a flowchart of a method according to an embodiment of the present invention; and
Fig. 4 schematically illustrates a computer-readable medium and a programmable control unit according to an embodiment of the present invention.

### Detailed Description

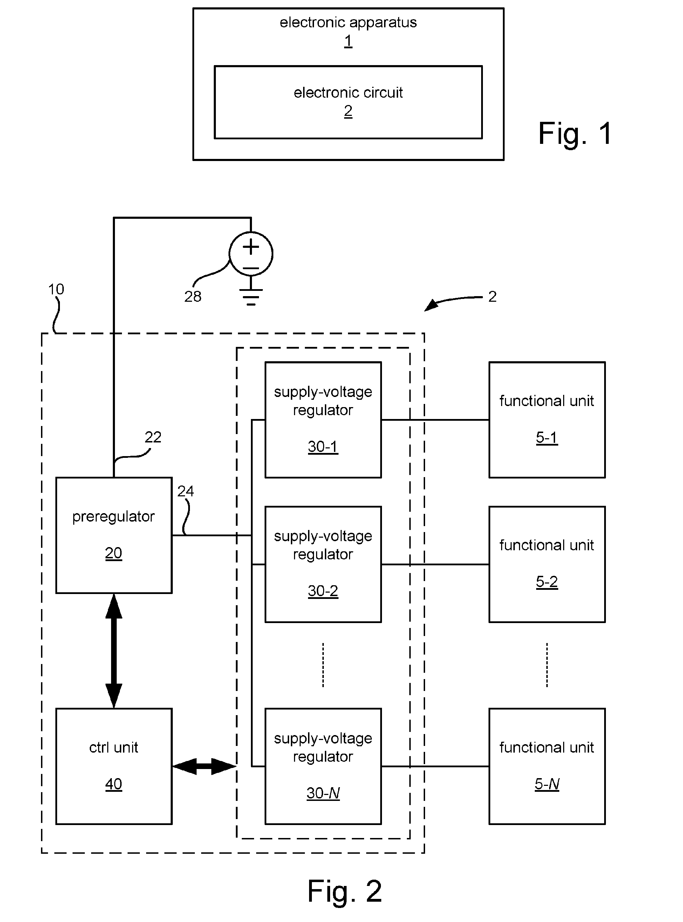

Fig. 1 schematically illustrates an electronic apparatus 1 according to an embodiment of the present invention. The electronic apparatus may e.g. be, but is not limited to, a portable communication apparatus (e.g. a mobile phone or the like). As illustrated in Fig. 1, the electronic apparatus 1 comprises an electronic circuit 2.
Fig. 2 is a block diagram of the electronic circuit 2 according to an embodiment of the present invention. According to this embodiment, the electronic circuit 2 comprises a plurality of functional units 5-1,...,5-*N*. Each of the functional units 5-1,...,5-*N* has its own individual power supply.

Furthermore, according to the embodiment illustrated in Fig. 2, the electronic circuit 2 comprises a power-supply circuit 10 arranged to supply power to the plurality of functional units 5-1,...,5-*N*. The power-supply circuit 10 comprises a preregulator 20 and a plurality of supply-voltage regulators 30-1,...,30-*N*. Each of the supply-voltage regulators 30-1,...,30-*N* is adapted to provide an output supply voltage to a corresponding one of the functional units 5-1,...,5-*N*. Furthermore, each of the supply-voltage regulators 30-1,...,30-*N* has a disabled, or deactivated, state. The disabled, or deactivated, state may be used e.g. when the corresponding functional unit 5-1,...,5-*N* is shut off and does not require any power from the supply-voltage regulator 30-1,...,30-*N*. The disabled, or deactivated, state may e.g. include that the supply-voltage regulator 30-1,...,30-*N* is disconnected from the corresponding functional unit 5-1,...,5-*N* (e.g. by means of a switch (not shown)), is disconnected from the preregulator 20 (e.g. by means of a switch (not shown)), and/or is set to output a "low" output supply voltage (e.g. equal or close to 0 V). Moreover, each of the supply-voltage regulators 30-1,...,30-*N* has an enabled, or activated, state. The enabled, or activated, state may be used e.g. when the corresponding functional unit 5-1,...,5-*N* is operational, or in any other state where it requires power to be supplied from the supply-voltage regulator 30-1,...,30-*N*. In the enabled, or activated, state, the supply-voltage regulator 30-1,...,30-*N* is operational to supply the required supply voltage to the corresponding functional unit 5-1,...,5-*N*. The preregulator has a power input terminal 22 for connection to a power-supply source 28 (e.g. a battery or a supply source generated from mains). Furthermore, the preregulator 20 is adapted to provide a common intermediate supply voltage to all of the supply-voltage regulators 30-1,...,30-*N* on a power output terminal 24 of the preregulator 20. The preregulator 20 is adapted to generate the intermediate supply voltage such that it follows a reference level of the preregulator. The design of such voltage regulators is known in the art and therefore not described in any detail herein.

Moreover, according to the embodiment illustrated in Fig. 2, the power-supply circuit comprises a control unit 40 adapted to control the reference level of the preregulator 20 at least based on which of the supply-voltage regulators 30-1,...,30-*N* are currently in the enabled state and which of the supply-voltage regulators are currently in the disabled state. Thereby, the intermediate supply voltage may e.g. be reduced if one of the supply-voltage regulators 30-1,...,30-*N* that requires a relatively high intermediate supply voltage for its operation is disabled, and the ones of the supply-voltage regulators 30-1,...,30-*N* that are left in the enabled state have lower requirements on the intermediate supply voltage for their operation. Thus, the use of an excessively high intermediate supply voltage may be avoided, whereby a relatively low overall power dissipation in the power-supply circuit 10 is facilitated.

According to some embodiments, the preregulator 20 is a buck regulator. Using a buck regulator as the preregulator 20 has the advantage that the intermediate supply voltage can be generated with a relatively high power efficiency. Furthermore, according to some embodiments, one, more than one, or possibly all of the supply-voltage regulators 30-1,...,30-*N* may be a low drop-out regulator (LDO). Using an LDO as a supply-voltage regulator 30-1,...,30-*N* has the advantage that the corresponding output supply voltage can be generated with relatively low noise, and that the required circuit area for the supply-voltage regulator 30-1,...,30-*N* may be relatively small (e.g. compared with a buck regulator). The design of buck regulators and LDOs as such are known in the art and therefore not further described herein.

According to some embodiments, the control unit 40 is adapted to determine, for each of the supply-voltage regulators 30-1,...,30-*N* currently in the enabled state, a minimum required intermediate supply voltage for the supply-voltage regulator 30-1,...,30-*N*. Furthermore, the control unit 40 may be adapted to control the reference level of the preregulator 20 such that said minimum required intermediate supply voltage is met for each of the supply-voltage regulators 30-1,...,30-*N* currently in the enabled state. For example, the control unit 40 may be adapted to control the reference level of the preregulator 20 such that it equals the highest minimum required intermediate supply voltage for the supply-voltage regulators 30-1,...,30-*N* currently in the enabled state. In that case, the lowest possible intermediate supply voltage is used, which is advantageous in terms of obtaining low power dissipation.

One or more of the supply-voltage regulators 30-1,...,30-*N* may have a predetermined minimum required intermediate supply voltage, which is the same each time that supply-voltage regulator 30-1,...,30-*N* is in the enabled state. Said predetermined minimum required intermediate supply voltage may e.g. be determined in the design phase (e.g. using computer simulations) to ensure that the supply-voltage regulator 30-1,...,30-*N* is capable of generating the corresponding output supply voltage in accordance with requirements set by the functional unit 5-1,...,5-*N* connected thereto, e.g. in terms of voltage level, current driving capability, etc. Said predetermined value may e.g. be stored in a look-up table or the like. The control unit 40 may be adapted to determine the minimum required intermediate supply voltage by means of performing a look-up operation in the look-up table.

Furthermore, one or more of the supply-voltage regulators 30-1,...,30-*N* may have a varying associated minimum required intermediate supply voltage. For example, the requirement may vary with an operational state of the functional unit 5-1,...,5-*N* connected to the supply-voltage regulator 30-1,...,30-*N*. Different operational states of said functional unit 5-1,...,5-*N* may have different associated requirements on one or more performance parameters of the functional unit 5-1,...,5-*N*. Hence, the control unit 40 may be adapted to determine said minimum required intermediate supply voltage for at least one of the supply-voltage regulators 30-1,...,30-*N* based on a performance-parameter requirement of the functional unit 5-1,...,5-*N* connected to that supply-voltage regulator 30-1,...,30-*N*.

According to some embodiments, one or more of the of the functional unit 5-1,...,5-*N* may be analog functional units, or functional units comprising at least some analog circuitry. The performance parameter requirement in such cases may e.g. be a requirement on a power-supply rejection ratio (PSRR) of the functional unit 5-1,...,5-*N*, on a signal to noise ratio (SNR) of the functional unit 5-1,...,5-*N*, or on a stability of an oscillator of the functional unit 5-1,...,5-*N*. If an improvement on such a performance parameter is needed, this may typically be accomplished by increasing a headroom between the intermediate supply voltage and the output supply voltage of the corresponding supply-voltage regulator 30-1,...,30-*N* and/or by increasing said output supply voltage, which in turn (in either case) would result in an increased minimum required intermediate supply voltage for that supply-voltage regulator 30-1,...,30-*N*. As an example, such a supply-voltage regulator 30-1,...,30-*N* may have a plurality of predetermined values of the minimum required intermediate supply voltage, each corresponding to a certain performance-parameter requirement (or operational state) of the corresponding functional unit 5-1,...,5-*N*. Said predetermined values may e.g. be determined in the design phase (e.g. using computer simulations) to ensure that the supply-voltage regulator 30-1,...,30-*N* is capable of generating the corresponding output supply voltage in accordance with the respective performance-parameter requirements of said corresponding functional unit 5-1,...,5-*N*. The predetermined values may e.g. be stored in a look-up table or the like. Hence, the control unit 40 may be adapted to determine the minimum required intermediate supply voltage by means of a table look-up based on the performance-parameter requirement (or operational state) of the corresponding functional unit 5-1,...,5-*N*.

The control unit 40 may be arranged to be operatively connected to one or more (possibly all) of the functional units 5-1,...,5-*N* for receiving data on current performance-parameter requirements (or operational states) from these functional units 5-1,...,5-*N* as a basis for the determination (e.g. table look-up) of the minimum required intermediate supply voltage.

The control unit 40 may additionally or alternatively be arranged to be operatively connected to the functional units 5-1,...,5-*N* for receiving data indicative of which of the supply-voltage regulators 30-1,...,30-*N* should be set in the enabled state and which of the supply-voltage regulators 30-1,...,30-*N* should be set in the disabled state. Furthermore, the control unit 40 may be adapted to control the state (enabled or disabled) of the supply-voltage regulators 30-1,...,30-*N* based on this data.

A supply-voltage regulator 30-1,...,30-*N* may (similarly to the preregulator 20) be adapted to generate its output supply voltage such that it follows a reference level of the supply-voltage regulator 30-1,...,30-*N*. According to some embodiments, the control unit 40 may further be adapted to control the reference level of at least one of the supply-voltage regulators 30-1,...,30-*N*. For example, the control unit 40 may be adapted to control the reference level of the supply-voltage regulator 30-1,...,30-*N* based on the aforementioned performance-parameter requirement of the corresponding functional unit 5-1,...,5-*N*.

According to some embodiments, the control unit 40 may be adapted to, when the reference level of the preregulator 20 is to be changed from a first level to a second level, change the reference level of the preregulator 20 stepwise via a number of intermediate reference levels between the first and the second level. Such a gradual stepwise change of the reference level has the advantage, compared with a direct change from the first to the second reference level, that less noise is generated on the intermediate supply voltage and the output supply voltages.

In a similar way, in embodiments wherein the control unit 40 is adapted to control the reference level of a supply-voltage regulator 30-1,...,30-*N*, the control unit 40 may be adapted to, when said reference level is to be changed from a first level to a second level, change the reference level of the supply-voltage regulator 30-1,...,30-*N* stepwise via a number of intermediate reference levels between the first and the second level. As above, this has the advantage, compared with a direct change from the first level to the second level, that less noise is generated on the intermediate supply voltage and the output supply voltages. As an example, when a supply voltage regulator 30-1,...,30-*N* is to be set in the disabled state, the control unit 40 may be adapted to make a gradual stepwise decrease of the reference level of that supply voltage regulator 30-1,...,30-*N* to a zero level (or close to zero level). Thereafter, the control unit 40 may optionally be adapted to switch off the supply of the intermediate supply voltage to that supply voltage regulator 30-1,...,30-*N*. Alternatively, the control unit 40 may of course be adapted to set the supply voltage regulator 30-1,...,30-*N* in the disabled state by simply setting the reference level of the supply voltage regulator 30-1,...,30-*N* to a zero level in a single step and/or switching off the supply of the intermediate supply voltage to that supply voltage regulator 30-1,...,30-*N*. However, setting the supply voltage regulator 30-1,...,30-*N* in the disabled state by means of a gradual decrease of the reference level is advantageous in terms of obtaining relatively low noise on the intermediate supply voltage and the output supply voltages.

In Fig. 2, the electronic circuit 2 is shown as having a single power-supply circuit 10. However, in some embodiments, the electronic circuit 2 may comprise more than one power-supply circuit of the same type as the power-supply circuit 10. These power-supply circuits may e.g. be arranged to be controlled independently of each other. For example, the functional units 5-1,...,5-*N* may be grouped into groups having similar requirements on the supply voltage, and each such group may have a dedicated power-supply circuit of the same type as the power-supply circuit 10.

Furthermore, in some embodiments, one or more functional units may be arranged to be driven directly by the intermediate supply voltage. In these embodiments, the power-supply circuit 10 may comprise one or more switches (not shown) arranged for connection between the power output terminal 24 of the preregulator 20 and said one or more functional units for switching on and off the power supply to said one or more functional units. In addition to which of the supply-voltage regulators 30-1,...,30-*N* are currently in the enabled state and which of the supply-voltage regulators 30-1,...,30-*N* are currently in the enabled state, the state (on/off) of said one or more switches may also set requirements on the intermediate supply voltage. Hence, the control unit 40 may be adapted to base the control of the reference level of the preregulator 20 also on the state of said one or more switches.

According to some embodiments of the present invention, there is provided a method of controlling the power-supply circuit 10. The method may e.g. be performed by the control unit 40. In accordance with these embodiments, the method comprises, controlling the reference level of the preregulator 20 at least based on which of the supply-voltage regulators 30-1,...,30-*N* are currently in the enabled state and which of the supply-voltage regulators 30-1,...,30-*N* are currently in the disabled state, e.g. as described above in the context of embodiments of the power-supply circuit 10.

Furthermore, in some embodiments, the method may comprise determining, for each of the supply-voltage regulators 30-1,...,30-*N* currently in the enabled state, the above-mentioned minimum required intermediate supply voltage for the supply-voltage regulator 30-1,...,30-*N*. In these embodiments, controlling the reference level of the preregulator 20 may further comprises controlling the reference level of the preregulator 20 such that said minimum required intermediate supply voltage is met for each of the supply-voltage regulators 30-1,...,30-*N* currently in the enabled state, e.g. as described above in the context of embodiments of the power-supply circuit 10. For example, as is also described above in the context of embodiments of the power-supply circuit 10, controlling the reference level of the preregulator 20 may comprise controlling the reference level of the preregulator 20 such that it equals the highest minimum required intermediate supply voltage for the supply-voltage regulators 30-1,...,30-*N* currently in the enabled state. In that case, as mentioned above, the lowest possible intermediate supply voltage is used, which is advantageous in terms of obtaining low power dissipation.

Similarly to what is disclosed above in the context of embodiments of the power-supply circuit 10, the method may comprise determining said minimum required intermediate supply voltage for at least one of the supply-voltage regulators 30-1,...,30-*N* based on a performance-parameter requirement of the functional unit 5-1,...5-*N* connected to that supply-voltage regulator 30-1,...,30-*N*. As above, said performance-parameter requirement may e.g. be a requirement on a PSRR of the functional unit 5-1,...5-*N*, on an SNR of the functional unit 5-1,...5-*N*, or on a stability of an oscillator of the functional unit 5-1,...5-*N*.

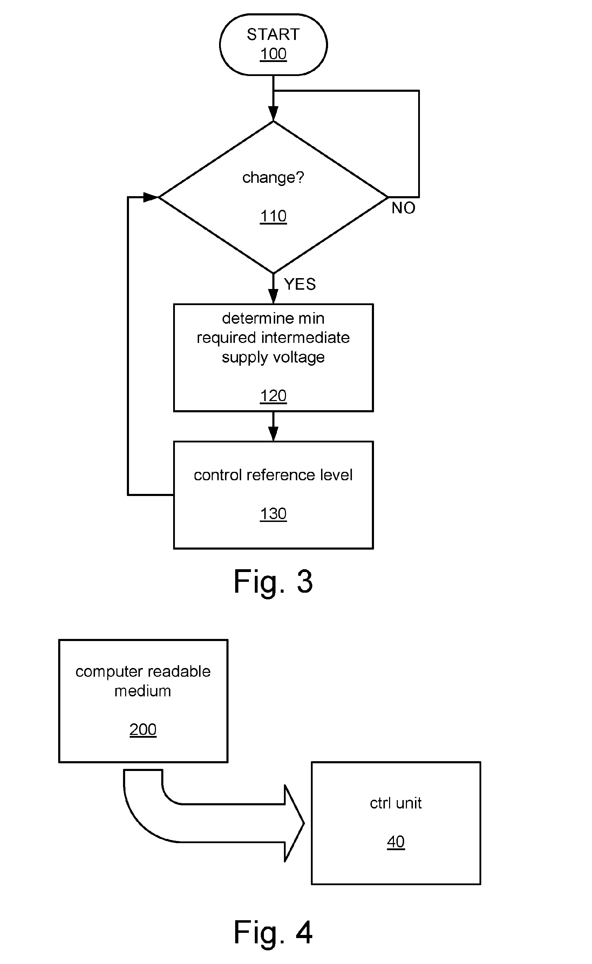

Fig. 3 is a flowchart illustrating an embodiment of the method. The operation is started in step 100. In step 110, it is determined whether a change in the operational conditions of the functional units 5-1,...,5-*N* and/or the supply-voltage regulators 30-1,...,30-*N* has occurred. Said change may e.g. be a change of which of the supply-voltage regulators 30-1,...,30-*N* are currently in the enabled state and which of the supply-voltage regulators 30-1,...,30-*N* are currently in the disabled state. Furthermore, said change may be a change of the abovementioned performance-parameter requirements (or operational states) of one or more of the functional units 5-1,...,5-*N*. If so, the operation proceeds to step 120. Otherwise, the operation stays in step 110 waiting for such a change to occur.

In step 120, the minimum required intermediate supply voltage is determined for each of the supply-voltage regulators 30-1,...,30-*N* currently in the enabled state. Thereafter, in step 130, the reference level of the preregulator 20 is controlled based on the determined values of the minimum required intermediate supply voltage for the supply-voltage regulators 30-1,...,30-*N* currently in the enabled state.

The control unit 40 (Fig. 2) may be implemented as an application-specific hardware unit. Alternatively, the control unit 40 or parts thereof may be implemented using one or more configurable or programmable hardware units, such as but not limited to one or more field-programmable gate arrays (FPGAs), processors, or microcontrollers. The control unit 40 may thus be a programmable control unit. Hence, embodiments of the present invention may be embedded in a computer program product, which enables implementation of the method and functions described herein. Therefore, according to embodiments of the present invention, there is provided a computer program product, comprising instructions arranged to cause the programmable control unit 40 to perform the steps of any of the embodiments of the method described above. The computer program product may comprise program code which is stored on a computer readable medium 200, as illustrated in Fig. 4, which can be loaded and executed by the programmable control unit 40 having processing capabilities, to cause it to perform the steps of any of the embodiments of the method described above.

The present invention has been described above with reference to specific embodiments. However, other embodiments than the above described are possible within the scope of the invention. Different method steps than those described above, performing the method by hardware or software, may be provided within the scope of the invention. The different features and steps of the embodiments may be combined in other combinations than those described. The scope of the invention is only limited by the appended patent claims.

## Claims

1. A power-supply circuit (10) for an electronic circuit (2) having a plurality of functional units (5-1, ... ,5-*N)*, wherein the power-supply circuit (10) comprises:
a plurality of supply-voltage regulators (30-1,...,30-*N*, each adapted to provide an output supply voltage to a corresponding one of the functional units (5-1,...,5-*N*) and each having a disabled and an enabled state;
a preregulator (20) adapted to provide a common intermediate supply voltage to all of the supply-voltage regulators (30-1,...,30-*N*), wherein the preregulator (20) is adapted to generate the intermediate supply voltage such that it follows a reference level of the preregulator (20); and
a control unit (40) adapted to control the reference level of the preregulator (20) at least based on which of the supply-voltage regulators (30-1,...,30-*N*) are currently in the enabled state and which of the supply-voltage regulators (30-1,...,30-*N*) are currently in the disabled state.

2. The power-supply circuit (10) according to claim 1, wherein the control unit (40) is adapted to determine, for each of the supply-voltage regulators (30-1,...,30-*N*) currently in the enabled state, a minimum required intermediate supply voltage for the supply-voltage regulator (30-1,...,30-*N*), and to control the reference level of the preregulator (20) such that said minimum required intermediate supply voltage is met for each of the supply-voltage regulators (30-1,...,30-*N*) currently in the enabled state.

3. The power-supply circuit (10) according to claim 2, wherein the control unit (40) is adapted to control the reference level of the preregulator (20) such that it equals the highest minimum required intermediate supply voltage for the supply-voltage regulators (30-1,...,30-*N*) currently in the enabled state.

4. The power-supply circuit (10) according to claim 2 or 3, wherein the control unit (40) is adapted to determine said minimum required intermediate supply voltage for at least one of the supply-voltage regulators (30-1,...,30-*N*) based on a performance-parameter requirement of the functional unit (5-1,...,5-*N*) connected to that supply-voltage regulator (30-1,...,30-*N*).

5. The power-supply circuit (10) according to claim 4, wherein said performance-parameter requirement is a requirement on a power-supply rejection ratio of the functional unit (5-1,...,5-*N*), on a signal to noise ratio of the functional unit (5-1,...,5-*N*), or on a stability of an oscillator of the functional unit (5-1,...,5-*N*).

6. The power-supply circuit (10) according to claim 4 or 5, wherein said at least one of the supply-voltage regulators (30-1,...,30-*N*) is adapted to generate its output supply voltage such that it follows a reference level of the supply-voltage regulator (30-1,...,30-*N*), and the control unit (40) is further adapted to control the reference level of the supply-voltage regulator (30-1,...,30-*N*) based on said performance-parameter requirement.

7. The power-supply circuit (10) according to any preceding claim, wherein the control unit (40) is adapted to, when the reference level of the preregulator (20) is to be changed from a first level to a second level, change the reference level of the preregulator (20) stepwise via a number of intermediate reference levels between the first and the second level.

8. The power-supply circuit (10) according to any preceding claim, wherein at least one of the supply-voltage regulators (30-1,...,30-*N*) is adapted to generate its output supply voltage such that it follows a reference level of the supply-voltage regulator (30-1,...,30-*N*), and the control unit is adapted to, when the reference level of the supply-voltage regulator (30-1,...,30-*N*) is to be changed from a first level to a second level, change the reference level of the supply-voltage regulator (30-1,...,30-*N*) stepwise via a number of intermediate reference levels between the first and the second level.

9. The power-supply circuit (10) according to any preceding claim, wherein the preregulator (20) is a buck regulator.

10. The power-supply circuit (10) according to any preceding claim, wherein at least one of the supply-voltage regulators (30-1,...,30-*N*) is a low drop-out, LDO, regulator.

11. An electronic circuit (2) comprising
a power-supply circuit (10) according to any preceding claim; and
said functional units (5-1,...,5-*N*).

12. A method of controlling a power-supply circuit (10) for an electronic circuit (2) having a plurality of functional units (5-1,...,5-*N*), wherein the power-supply circuit (10) comprises:
a plurality of supply-voltage regulators (30-1,...,30-*N*), each adapted to provide an output supply voltage to a corresponding one of the functional units (5-1,...,5-*N*) and each having a disabled and an enabled state; and
a preregulator (20) adapted to provide a common intermediate supply voltage to all of the supply-voltage regulators (30-1,...,30-*N*), wherein the preregulator (20) is adapted to generate the intermediate supply voltage such that it follows a reference level of the preregulator (20);
and the method comprises:
controlling the reference level of the preregulator (20) at least based on which of the supply-voltage regulators (30-1,...,30-*N*) are currently in the enabled state and which of the supply-voltage regulators (30-1,...,30-*N*) are currently in the disabled state.

13. The method according to claim 12, further comprising:
determining, for each of the supply-voltage regulators (30-1,...,30-*N*) currently in the enabled state, a minimum required intermediate supply voltage for the supply-voltage regulator (30-1,...,30-*N*); wherein
controlling the reference level of the preregulator (20) further comprises controlling the reference level of the preregulator (20) such that said minimum required intermediate supply voltage is met for each of the supply-voltage regulators (30-1,...,30-*N*) currently in the enabled state.

14. The method according to claim 13, wherein
controlling the reference level of the preregulator (20) comprises controlling the reference level of the preregulator (20) such that it equals the highest minimum required intermediate supply voltage for the supply-voltage regulators (30-1,...,30-*N*) currently in the enabled state.

15. The method according to claim 13 or 14, comprising
determining said minimum required intermediate supply voltage for at least one of the supply-voltage regulators (30-1,...,30-*N*) based on a performance-parameter requirement of the functional unit (5-1,...5-*N*) connected to that supply-voltage regulator (30-1,...,30-*N*).

16. The method according to claim 15, wherein said performance-parameter requirement is a requirement on a power-supply rejection ratio of the functional unit (5-1,...5-*N*), on a signal to noise ratio of the functional unit (5-1,...5-*N*)*,* or on a stability of an oscillator of the functional unit (5-1,...5-*N*).

17. A computer program product comprising computer program code means for executing the method according to any of the claims 12-16 when said computer program code means are run by a programmable control unit (40) of the power-supply circuit (10).

18. A computer readable medium (200) having stored thereon a computer program product comprising computer program code means for executing the method according to any of the claims 12 - 16 when said computer program code means are run by a programmable control unit (40) of the power-supply circuit (10).
